# EUROPEAN PATENT APPLICATION

(11) **EP 4 539 167 A1**
(43) Date of publication of application: **16.04.2025**
(21) Application number: 23849889.3
(22) Date of filing: 19.07.2023
(51) Int. Cl.: H01M 4/587, H01G 11/06, H01G 11/30, H01G 11/42, H01M 4/36, H01M 4/505, H01M 4/525, H01M 10/0525

(54) **NON-AQUEOUS ELECTROLYTE POWER STORAGE ELEMENT**

(30) Priority: 01.08.2022 JP 2022122916
(71) Applicant: GS Yuasa International Ltd., Kisshoin, Minami-ku, Kyoto-shi, Kyoto 601-8520 (JP)
(72) Inventor: FURUYA, Yasuyuki, Kyoto-shi, Kyoto 601-8520 (JP); KAWASOE, Yudai, Kyoto-shi, Kyoto 601-8520 (JP); TAKANO, Masashi, Kyoto-shi, Kyoto 601-8520 (JP); HARINAGA, Ukyo, Kyoto-shi, Kyoto 601-8520 (JP)
(74) Representative: Isarpatent
(86) International application number: PCT/JP2023/026351
(87) International publication number: WO 2024/029333

(57) **Abstract**

A nonaqueous electrolyte energy storage device according to one aspect of the present invention includes: a positive electrode containing a positive active material containing a tungsten element; and a negative electrode containing carbon-coated solid graphite in which at least a part of a surface of the solid graphite is coated with a carbonaceous material other than graphite, in which a percentage of voids in the carbon-coated solid graphite is 2% or less, and a coating amount of the carbonaceous material in the carbon-coated solid graphite is 12.0% by mass or more.

## Description

### TECHNICAL FIELD

The present invention relates to a nonaqueous electrolyte energy storage device.

### BACKGROUND ART

Nonaqueous electrolyte secondary batteries typified by lithium ion secondary batteries are often used for electronic devices such as personal computers and communication terminals, motor vehicles, and the like, because the batteries are high in energy density. The nonaqueous electrolyte secondary batteries generally include a pair of electrodes electrically separated from each other by a separator, and a nonaqueous electrolyte interposed between the electrodes, and are configured to allow charge transport ions to be transferred between the two electrodes for charge-discharge. In addition, capacitors such as lithium ion capacitors and electric double-layer capacitors are also widely in use as nonaqueous electrolyte energy storage devices other than the nonaqueous electrolyte secondary batteries.

As a positive active material for a nonaqueous electrolyte energy storage device, a lithium transition metal composite oxide, a polyanion compound or the like is used. In order to improve the performance of the nonaqueous electrolyte energy storage device, or the like, for example, the surfaces of the particles of the positive active material are coated with another compound. Patent Document 1 describes a positive electrode material for a lithium secondary battery in which a particle surface of a lithium-manganese composite oxide is coated with a metal oxide such as titanium oxide or tin oxide. On the other hand, for negative active materials, carbon materials such as graphite have been widely used (see Patent Document 2).

### PRIOR ART DOCUMENTS

### PATENT DOCUMENT

Patent Document 1: JP-A-2001-6676
Patent Document 2: JP-A-2005-222933

### SUMMARY OF THE INVENTION

### PROBLEMS TO BE SOLVED BY THE INVENTION

In the nonaqueous electrolyte energy storage device, it is desired that the capacity of the nonaqueous electrolyte energy storage device hardly decreases even after the nonaqueous electrolyte energy storage device is stored in a high-temperature environment.

An object of the present invention is to provide a nonaqueous electrolyte energy storage device having a large capacity after storage in a high-temperature environment.

### MEANS FOR SOLVING THE PROBLEMS

A nonaqueous electrolyte energy storage device according to one aspect of the present invention includes: a positive electrode containing a positive active material containing a tungsten element; and a negative electrode containing carbon-coated solid graphite in which at least a part of a surface of the solid graphite is coated with a carbonaceous material other than graphite, in which a percentage of voids in the carbon-coated solid graphite is 2% or less, and a coating amount of the carbonaceous material in the carbon-coated solid graphite is 12.0% by mass or more.

### ADVANTAGES OF THE INVENTION

According to one aspect of the present invention, it is possible to provide a nonaqueous electrolyte energy storage device having a large capacity after storage in a high-temperature environment.

### BRIEF DESCRIPTION OF THE DRAWINGS

Fig. 1 is a see-through perspective view illustrating an embodiment of a nonaqueous electrolyte energy storage device.
Fig. 2 is a schematic diagram showing an embodiment of an energy storage apparatus including a plurality of nonaqueous electrolyte energy storage devices.

### MODE FOR CARRYING OUT THE INVENTION

First, an outline of a nonaqueous electrolyte energy storage device disclosed in the present specification will be described.

[1]: A nonaqueous electrolyte energy storage device according to one aspect of the present invention includes: a positive electrode containing a positive active material containing a tungsten element; and a negative electrode containing carbon-coated solid graphite in which at least a part of a surface of the solid graphite is coated with a carbonaceous material other than graphite, in which a percentage of voids in the carbon-coated solid graphite is 2% or less, and a coating amount of the carbonaceous material in the carbon-coated solid graphite is 12.0% by mass or more.

The nonaqueous electrolyte energy storage device according to [1] has a large capacity after storage in a high-temperature environment. The reasons therefor are not clear, but the following reasons are presumed. By using the positive active material containing the tungsten element, the initial power of the nonaqueous electrolyte energy storage device is increased. However, when the nonaqueous electrolyte energy storage device is stored in a high-temperature environment, the tungsten element contained in the positive active material is eluted into the nonaqueous electrolyte. The present inventors have found that the eluted tungsten element is precipitated on the negative active material, and the tungsten element precipitated on the surface (when the negative active material is graphite, in particular, an edge surface of a graphite crystal and a surface of a void inside a graphite particle) of the negative active material reacts with the nonaqueous electrolyte, so that the nonaqueous electrolyte is decomposed, and the capacity of the nonaqueous electrolyte energy storage device may be reduced.

On the other hand, according to the nonaqueous electrolyte energy storage device described in [1], by using solid graphite having a small number of internal voids of graphite particles as the negative active material, the tungsten element eluted from the positive active material is suppressed from being precipitated to the surface of the internal voids of the graphite particles. Furthermore, by coating at least a part of the surface of the solid graphite with a carbonaceous material other than graphite and setting the coating amount of the carbonaceous material to 12.0% by mass or more, the edge surface of the graphite crystal in the solid graphite can be appropriately coated with the carbonaceous material, and precipitation of the tungsten element on the edge surface of the graphite crystal can be suppressed. As a result, the decomposition reaction of the nonaqueous electrolyte hardly occurs on the edge surface of the graphite crystal in the solid graphite and the voids inside the graphite particles. It is presumed that this contributes to increasing the capacity of the nonaqueous electrolyte energy storage device according to [1] after storage in a high-temperature environment.

The "graphite" refers to a carbon material in which an average grid spacing (d₀₀₂) of a (002) plane determined by X-ray diffraction before charge-discharge or in a discharged state is 0.33 nm or more and less than 0.34 nm.
In this regard, the "discharged state" of the carbon material such as graphite means a state discharged such that charge transport ions such as lithium ions that can be occluded and released in association with charge-discharge are sufficiently released from the carbon material that is a negative active material. For example, in a half cell using a negative electrode containing a carbon material as a negative active material as a working electrode and metal lithium (Li) as a counter electrode, a state in which an open circuit voltage is 0.6 V or more is a typical example of a "discharged state" of the carbon material.

The term "solid" of the solid graphite means that the inside of the particle of the graphite is filled substantially without voids. More specifically, being "solid" means that in a cross section of a particle observed in a SEM image acquired with the use of a scanning electron microscope (SEM), the void area ratio (percentage of voids) in the particle to the area of the whole particle is 2% or less.
"The void area ratio (percentage of voids) in the particle to the area of the whole particle" in the graphite particles can be determined by the following procedure.

### (1) Preparation of sample for measurement

The negative electrode to be measured is fixed with a thermosetting resin. For the negative electrode fixed with the resin, the cross section is exposed by an ion milling method to fabricate a sample for measurement. The negative electrode to be measured is prepared by the following procedure. The nonaqueous electrolyte energy storage device is discharged at a constant current with a current of 0.1 C until the voltage becomes an end-of-discharge voltage under normal usage, so that the energy storage device is brought to a discharged state. The nonaqueous electrolyte energy storage device in the discharged state is disassembled, and the negative electrode is taken out. A half cell using the taken-out negative electrode as a working electrode and metal Li as a counter electrode is assembled. When the open circuit voltage in this half cell is less than 0.6 V, the half cell is discharged so that the open circuit voltage is 0.6 V or more. The discharge in the half cell refers to an oxidation reaction in which charge transport ions are released from graphite as a negative active material. The half cell is disassembled, and the negative electrode is taken out, sufficiently washed with dimethyl carbonate, and then dried under reduced pressure at room temperature for 24 hours. The operations from the disassembly of the nonaqueous electrolyte energy storage device to the preparation of the negative electrode to be measured are performed in a dry air atmosphere with a dew point of -40°C or lower. Here, the term "normal use" means use of the nonaqueous electrolyte energy storage device under the charge-discharge conditions recommended or specified for the nonaqueous electrolyte energy storage device.

### (2) Acquisition of SEM image

For acquiring an SEM image, JSM-7001F (manufactured by JEOL Ltd.) is used as a scanning electron microscope. For the SEM image, a secondary electron image is observed. The acceleration voltage is 15 kV. The observation magnification is set such that the number of graphite particles appearing in one field of view is three or more and fifteen or less. The obtained SEM image is stored as an image file. In addition, various conditions such as a spot diameter, a working distance, an irradiation current, luminance, and a focus are appropriately set so as to make the contours of the graphite particles clear.

### (3) Cut-out of contour of graphite particle

The contour of the graphite particle is cut out from the acquired SEM image by using an image cutting function of image editing software Adobe Photoshop Elements 11. The contour is cut out by using a quick selection tool to select the outside of the contour of the graphite particle and edit the part excluding the graphite particle to a black background. In this regard, when the number of graphite particles from which the contours have been able to be cut out is less than three, an SEM image is acquired again, and the cut-out is performed until the number of graphite particles from which the contours have been able to be cut out is three or more.

### (4) Binarization processing

The image of the first graphite particle among the cut-out graphite particles is subjected to binarization processing with, as a threshold value, a concentration set to be 20% lower than the concentration at which the intensity reaches the maximum, with the use of image analysis software PopImaging 6.00. By the binarization processing, the area on the higher-concentration side is calculated as an "area S1 of voids in the particle".

Then, the image of the same first graphite particle is subjected to binarization processing with a concentration of 10% as a threshold value. The outer edge of the graphite particle is determined by the binarization processing, and the area inside the outer edge is calculated as an "area S0 of the whole particle".

The ratio (S 1/S0) of S1 to S0 is calculated with the use of S1 and S0 calculated above to calculate an "area ratio R1 of voids in the particle to the area of the whole particle" in the first graphite particle.

The images of the second and subsequent graphite particles among the cut-out graphite particles are also each subjected to the binarization processing mentioned above, and the areas S1 and S0 are calculated. Based on the calculated area S1 and area S0, area ratios R2, R3,... of voids of the respective graphite particles are calculated.

### (5) Determination of void area ratio

The average value for all of the area ratios R1, R2, R3,... of the voids, calculated by the binarization processing is calculated to determine "the area ratio (percentage of voids) of voids in the particles to the total area of the particles".

It is to be noted that, instead of the scanning electron microscope used for "acquisition of SEM image", the image editing software used for "cut-out of contour of graphite particle", and the image analysis software used for the "binarization processing", apparatuses, software, and the like capable of the corresponding measurement, image editing, and image analysis may be used.

[2]: In the nonaqueous electrolyte energy storage device according to [1], the carbonaceous material may be non-graphitic carbon. In the nonaqueous electrolyte energy storage device according to [2], since the carbonaceous material is non-graphitic carbon, a decrease in capacity after storage in a high-temperature environment can be further reduced. The "non-graphitic carbon" refers to a carbonaceous material that does not correspond to the" graphite" described above.

[3]: In the nonaqueous electrolyte energy storage device according to [1] or [2], the solid graphite may be solid natural graphite. Natural graphite has higher crystallinity than artificial graphite. Therefore, when the solid graphite is solid natural graphite, in the nonaqueous electrolyte energy storage device according to [3], the discharge capacity per mass of the negative active material increases, and the capacity of the nonaqueous electrolyte energy storage device after storage in a high-temperature environment also increases.

[4]: In the nonaqueous electrolyte energy storage device according to any one of [1] to [3], the positive active material may further contain a transition metal element other than the tungsten element and a lithium element, and the content of the tungsten element with respect to the metal element other than the tungsten element and the lithium element in the positive active material may be 0.2 mol% or more. In the nonaqueous electrolyte energy storage device according to [4], since a sufficient amount of tungsten element is contained in the positive active material, the initial power and capacity of the nonaqueous electrolyte energy storage device are increased, and even when such a high concentration of tungsten element is contained in the positive active material, the edge surface of the graphite crystal of solid graphite is appropriately coated with the carbonaceous material by using it in combination with the negative electrode containing solid graphite coated with a specific amount of carbonaceous material, so that the capacity of the nonaqueous electrolyte energy storage device after storage in a high-temperature environment can be further increased.

In the present invention, the "content of tungsten element with respect to metal elements other than tungsten element and lithium element in positive active material" means a ratio (mol%) of a substance amount (mol) of the tungsten element to a total substance amount (mol) of all metal elements other than the tungsten element and the lithium element contained in the positive active material.

The measurement of the substance amount of the tungsten element and the total substance amount of all metal elements other than the tungsten element and the lithium element in the positive active material is performed by the following procedure. First, the nonaqueous electrolyte energy storage device is subjected to constant current discharge at a discharge current of 0.05C to the lower limit voltage under normal use. After the battery is disassembled to take out the positive electrode, a test battery using metal Li as the counter electrode is assembled, constant current discharge is performed at a discharge current of 10 mA per 1 g of a positive active material until the positive potential reaches 3.0 V vs. Li/Li⁺, and the positive electrode is adjusted to the completely discharged state. The cell is disassembled again to take out the positive electrode. The components (electrolyte and the like) attached to the positive electrode taken out is sufficiently washed with a dimethyl carbonate, and dried under reduced pressure at room temperature for 24 hours, and the positive active material is collected. Operations from disassembly of the nonaqueous electrolyte energy storage device to collection of the positive active material for measurement are performed in an argon atmosphere having a dew point of -60°C or lower. The positive active material collected by the above-described method is entirely dissolved in an acid capable of dissolving the tungsten element and the positive active material by a microwave decomposition method. Next, this solution is diluted with pure water to a certain amount to obtain a measurement solution. Then, the concentrations of all the metal elements contained in the positive active material containing the tungsten element and the lithium element in the measurement solution are measured by high-frequency inductively coupled plasma atomic emission spectrometry (ICP) using a multi-type high-frequency inductively coupled plasma atomic emission spectrometer ICPE-9820 (manufactured by Shimadzu Corporation). From the obtained concentrations of the tungsten element, the lithium element, and all the metal elements other than the tungsten element and the lithium element, the substance amount of the tungsten element in the positive active material and the total substance amount of all the metal elements other than the tungsten element and the lithium element are quantified. In the calculation of the concentrations of the tungsten element, the lithium element, and all the metal elements other than the tungsten element and the lithium element in the measurement solution, for example, a calibration curve method in which a calibration curve is created from a solution having a known concentration of each element and the concentration of each element in the above measurement solution is calculated can be used.

[5]: In the nonaqueous electrolyte energy storage device according to any one of [1] to [4], the solid graphite may have an average particle size of 5 µm or more. When solid graphite having a large particle size is used, the surface area of the solid graphite decreases, and as a result, in the nonaqueous electrolyte energy storage device according to the above [5], precipitation of tungsten element hardly occurs on the surfaces of the particles of the solid graphite, and the capacity of the nonaqueous electrolyte energy storage device after storage in a high-temperature environment is further increased.

The term "average particle size" means a value at which a volume-based integrated distribution calculated in accordance with JIS-Z-8819-2 (2001) is 50% based on a particle size distribution measured by a laser diffraction/scattering method for a diluted solution obtained by diluting particles with a solvent in accordance with JIS-Z-8825 (2013).

The configuration of a nonaqueous electrolyte energy storage device, the configuration of an energy storage apparatus, and a method for manufacturing the nonaqueous electrolyte energy storage device according to an embodiment of the present invention, and other embodiments will be described in detail. It is to be noted that the names of the respective constituent members (respective constituent elements) for use in the respective embodiments may be different from the names of the respective constituent members (respective constituent elements) for use in the background art.

### <Configuration of nonaqueous electrolyte energy storage device>

A nonaqueous electrolyte energy storage device according to an embodiment of the present invention (hereinafter, also referred to simply as an "energy storage device") includes: an electrode assembly including a positive electrode, a negative electrode, and a separator; a nonaqueous electrolyte; and a case that houses the electrode assembly and the nonaqueous electrolyte. The electrode assembly is typically a stacked type assembly that has a plurality of positive electrodes and a plurality of negative electrodes stacked with separators interposed therebetween, or a wound type assembly that has stacked positive and negative electrodes wound with a separator interposed therebetween. The nonaqueous electrolyte is present to be impregnated in the positive electrode, the negative electrode, and the separator. A nonaqueous electrolyte secondary battery (hereinafter, also referred to simply as a "secondary battery") will be described as an example of the nonaqueous electrolyte energy storage device.

### (Positive electrode)

The positive electrode includes a positive substrate and a positive active material layer disposed directly on the positive substrate or over the positive substrate with an intermediate layer interposed therebetween.

The positive substrate has conductivity. Whether the positive substrate has "conductivity" or not is determined with the volume resistivity of 10⁻² Ω ·cm measured in accordance with JIS-H-0505 (1970) as a threshold. As the material of the positive substrate, a metal such as aluminum, titanium, tantalum, or stainless steel, or an alloy thereof is used. Among these metals and alloys, aluminum or an aluminum alloy is preferable from the viewpoints of electric potential resistance, high conductivity, and cost. Examples of the positive substrate include a foil, a deposited film, a mesh, and a porous material, and a foil is preferable from the viewpoint of cost. Accordingly, the positive substrate is preferably an aluminum foil or an aluminum alloy foil. Examples of the aluminum or aluminum alloy include A1085, A3003, A1N30, and the like specified in JIS-H-4000 (2014) or JIS-H-4160 (2006).

The average thickness of the positive substrate is preferably 3 µm or more and 50 µm or less, more preferably 5 µm or more and 40 µm or less, still preferably 8 µm or more and 30 µm or less, particularly preferably 10 µm or more and 25 µm or less. When the average thickness of the positive substrate falls within the above range, it is possible to enhance the energy density per volume of the nonaqueous electrolyte energy storage device while increasing the strength of the positive substrate.

The intermediate layer is a layer arranged between the positive substrate and the positive active material layer. The intermediate layer includes a conductive agent such as carbon particles, thereby reducing contact resistance between the positive substrate and the positive active material layer. The configuration of the intermediate layer is not particularly limited, and includes, for example, a binder and a conductive agent.

The positive active material layer includes a positive active material. The positive active material layer contains optional components such as a conductive agent, a binder, a thickener, and a filler, if necessary.

The positive active material contains a tungsten element. This tungsten element may be present in the form of a compound such as an oxide (WO₃). The compound containing a tungsten element may coat at least a part of the surface of particles of a substance capable of occluding and releasing charge transport ions such as lithium ions, for example. In other words, the positive active material may contain a substance capable of occluding and releasing charge transport ions and a compound containing a tungsten element. The positive active material may be substantially composed only of a substance capable of occluding and releasing charge transport ions and a compound containing a tungsten element. The substance capable of occluding and releasing charge transport ions itself may contain tungsten element (That is, the tungsten element may be solid-solved in the positive active material.). The tungsten element may be present, for example, on the surfaces of the particles of the positive active material. The tungsten element may be present inside the particles of the positive active material. As described above, when the positive active material contains a tungsten element, side reactions in the positive electrode can be suppressed, and conductivity of charge transport ions such as lithium ions can be improved. As a result, the power and capacity of the nonaqueous electrolyte energy storage device can be improved. As a form in which a tungsten element is contained in the positive active material, there is a method in which a compound containing a tungsten element is coated on a particle surface of a substance capable of occluding and releasing charge transport ions. In addition, there is also a method in which a tungsten element is added at the time of synthesis of a substance capable of occluding and releasing charge transport ions, and firing is performed, so that a compound containing the tungsten element is supported on the particle surface of the positive electrode material or contained in the particle. As the positive active material containing a tungsten element, a commercially available product may be used.

As the substance capable of occluding and releasing charge transport ions, a substance capable of occluding and releasing lithium ions is preferable, and conventionally known materials can be used as these substances. Examples of such a substance include lithium-transition metal composite oxides that have an α-NaFeO₂-type crystal structure, lithium-transition metal oxides that have a spinel-type crystal structure, polyanion compounds, chalcogenides, and sulfur. Examples of the lithium transition metal composite oxides that includes an α-NaFeO₂-type crystal structure include Li[LiₓNi₍₁₋ₓ₎]O₂ (0 ≤ x < 0.5), Li[LiₓNi_{γ}Co_{(1-x-γ)}]O₂ (0 ≤ x < 0.5, 0 < y < 1, 0 < 1-x-y), Li[LiₓCo₍₁₋ₓ₎]O₂ (0 ≤ x < 0.5), Li[LiₓNi_{γ}Mn_{(1-x-γ)}]O₂ (0 ≤ x < 0.5, 0 < γ < 1, 0 < 1-x-y), Li[LiₓNi_{γ}Mn_{β}Co_{(1-x-γ-β)}]O₂ (0 ≤ x < 0.5, 0 < y, 0 < β, 0.5 < γ + β < 1, 0 < 1-x-γ-β), and Li[LiₓNi_{γ}Co_{β}Al_{(1-x-γ-β)}]O₂ (0 ≤ x < 0.5, 0 < y, 0 < β, 0.5 < γ + β < 1, 0 < 1-x-γ-β). Examples of the lithium-transition metal composite oxides including a spinel-type crystal structure include LiₓMn₂O₄ and LiₓNi_{γ}Mn_{(2-γ)}O₄. Examples of the polyanion compounds include LiFePO₄, LiMnPO₄, LiNiPO₄, LiCoPO₄, Li₃V₂(PO₄)₃, Li₂MnSiO₄, and Li₂CoPO₄F. Examples of the chalcogenides include a titanium disulfide, a molybdenum disulfide, and a molybdenum dioxide. Some of atoms or polyanions in these materials may be substituted with atoms or anion species composed of other elements. These materials may have surfaces coated with other materials. In the positive active material layer, one of these materials may be used singly, or two or more thereof may be mixed and used.

Among these materials, as the substance capable of occluding and releasing charge transport ions, a lithium transition metal composite oxide having an α-NaFeO₂-type crystal structure or a spinel-type crystal structure is preferable; a lithium transition metal composite oxide including an α-NaFeO₂-type crystal structure is more preferable; and Li[LiₓNi_{γ}Mn_{β}Co_{(1-x-γ-β)}]O₂ (0 ≤ x < 0.5, 0 < y, 0 < β, 0.5 < γ+β < 1, 0 < 1-x-γ-β) is still preferable.

In the above Li[LiₓNi_{γ}Mn_{β}Co_{(1-x-γ-β)}]O₂, for example, 0.1 ≤ γ < 0.9 and 0.1 ≤ β < 0.9 are preferable. When such a substance is used, the effect of the tungsten element for increasing the power and capacity of the nonaqueous electrolyte energy storage device is particularly sufficiently exhibited.

When a lithium transition metal composite oxide, a polyanion compound, or the like is used as the substance capable of occluding and releasing charge transport ions, the positive active material further contains a transition metal element other than the tungsten element. When the positive active material further contains a transition metal element other than the tungsten element and a lithium element, the content of the tungsten element with respect to the metal element other than the tungsten element and the lithium element in the positive active material is preferably 0.2 mol% or more and 3 mol% or less, and more preferably 0.5 mol% or more and 2 mol% or less. By setting the content of the tungsten element to the above lower limit or more, the effect of the tungsten element in the positive active material is sufficiently exhibited, and the power of the nonaqueous electrolyte energy storage device can be further increased. On the other hand, by setting the content of the tungsten element to the above upper limit or less, elution of the tungsten element from the positive active material can be easily suppressed, and as a result, a decrease in capacity after storage in a high-temperature environment can be further reduced.

The content of the positive active material in the positive active material layer is preferably 50% by mass or more and 99% by mass or less, more preferably 70% by mass or more and 98% by mass or less, and still preferably 80% by mass or more and 95% by mass or less. When the content of the positive active material falls within the above range, a balance can be achieved between the high energy density and productivity of the positive active material layer.

The positive active material is typically particles (powder). The average particle size of the positive active material is preferably 0.1 µm or more and 20 µm or less, for example. By setting the average particle size of the positive active material to be equal to or greater than the lower limit, the positive active material is easily produced or handled. By setting the average particle size of the positive active material to be equal to or less than the upper limit, the electron conductivity of the positive active material layer is improved. In the case of using a composite of the positive active material and another material, the average particle size of the composite is defined as the average particle size of the positive active material.

A crusher, a classifier, or the like is used in order to obtain a powder with a predetermined particle size. Examples of the crushing method include a method of using a mortar, a ball mill, a sand mill, a vibratory ball mill, a planetary ball mill, a jet mill, a counter jet mill, a whirling airflow-type jet mill, a sieve, or the like. At the time of crushing, wet-type crushing in coexistence with water or a nonaqueous solvent such as hexane can also be used. As the classification method, a sieve, a wind classifier, or the like is used both in dry manner and in wet manner, if necessary.

The conductive agent is not particularly limited as long as it is a material exhibiting conductivity. Examples of such a conductive agent include carbonaceous materials, metals, and conductive ceramics. Examples of the carbonaceous materials include graphite, non-graphitic carbon, and graphene-based carbon. Examples of the non-graphitic carbon include carbon nanofibers, pitch-based carbon fibers, and carbon black. Examples of the carbon black include furnace black, acetylene black, and ketjen black. Examples of the graphene-based carbon include graphene, carbon nanotubes (CNTs), and fullerene. Examples of the form of the conductive agent include a powdery form and a fibrous form. As the conductive agent, one of these materials may be used singly, or two or more thereof may be used in mixture. These materials may be composited and then used. For example, a composite material of carbon black and CNT may be used. Among these materials, carbon black is preferable from the viewpoint of electron conductivity and coatability, and in particular, acetylene black is preferable.

The content of the conductive agent in the positive active material layer is preferably 1% by mass or more and 10% by mass or less, more preferably 3% by mass or more and 9% by mass or less. When the content of the conductive agent falls within the above range, the energy density of the nonaqueous electrolyte energy storage device can be enhanced.

Examples of the binder include: thermoplastic resins such as fluororesins (e.g., polytetrafluoroethylene (PTFE), polyvinylidene fluoride (PVDF)), polyethylene, polypropylene, polyacryl, and polyimide; elastomers such as an ethylene-propylene-diene rubber (EPDM), sulfonated EPDM, a styrene butadiene rubber (SBR), and a fluororubber; and polysaccharide polymers.

The content of the binder in the positive active material layer is preferably 1% by mass or more and 10% by mass or less, more preferably 3% by mass or more and 9% by mass or less. When the content of the binder falls within the above range, thereby allowing the positive active material to be stably held.

Examples of the thickener include polysaccharide polymers such as carboxymethylcellulose (CMC) and methylcellulose. When the thickener includes a functional group that is reactive with lithium and the like, the functional group may be deactivated by methylation or the like in advance.

The content of the thickener in the positive active material layer may be, for example, 0.1% by mass or more and 6% by mass or less, or may be 0.5% by mass or more and 3% by mass or less. The content of the thickener in the positive active material layer may be 1% by mass or less, and the positive active material layer may not contain the thickener.

The filler is not particularly limited. Examples of the filler include polyolefins such as polypropylene and polyethylene, inorganic oxides such as silicon dioxide, alumina, titanium dioxide, calcium oxide, strontium oxide, barium oxide, magnesium oxide and aluminosilicate, hydroxides such as magnesium hydroxide, calcium hydroxide and aluminum hydroxide, carbonates such as calcium carbonate, hardly soluble ionic crystals of calcium fluoride, barium fluoride, and barium sulfate, nitrides such as aluminum nitride and silicon nitride, and substances derived from mineral resources, such as talc, montmorillonite, boehmite, zeolite, apatite, kaolin, mullite, spinel, olivine, sericite, bentonite and mica, or artificial products thereof.

The content of the filler in the positive active material layer may be, for example, 0.1% by mass or more and 8% by mass or less, or may be 0.5% by mass or more and 5% by mass or less. The content of the filler in the positive active material layer may be 3% by mass or less, or may be 1% by mass or less, and the filler may not be contained in the positive active material layer.

The mass per unit area of the positive active material layer is not particularly limited, but is, for example, 4.0 mg/cm² or more and 15.0 mg/cm² or less. The lower limit of the mass per unit area of the positive active material layer is preferably 4.5 mg/cm², and more preferably 4.8 mg/cm² or 5.0 mg/cm². In some aspects, the mass per unit area of the positive active material layer may be, for example, 5.5 mg/cm² or more, or 5.8 mg/cm² or more. The upper limit of the mass per unit area of the positive active material layer is preferably 12.0 mg/cm², and more preferably 10.0 mg/cm². In the nonaqueous electrolyte energy storage device including the positive active material layer in which the mass per unit area is in the above range, the effect of application of the present configuration can be more suitably exhibited. "The mass per unit area of the positive active material layer" refers to a mass per unit area of one positive active material layer. For example, when the positive electrode has a positive substrate with the positive active material layer provided on each of both surfaces of the positive substrate, "the mass per unit area of the positive active material layer" is a mass per unit area of the positive active material layer on one of the surfaces of the positive substrate. The same applies to "the mass per unit area of the negative active material layer" described later.

The positive active material layer may contain typical nonmetal elements such as B, N, P, F, Cl, Br, and I, typical metal elements such as Li, Na, Mg, Al, K, Ca, Zn, Ga, Ge, Sn, Sr, and Ba, and transition metal elements such as Sc, Ti, V, Cr, Mn, Fe, Co, Ni, Cu, Mo, Zr, Nb, and W as a component other than the positive active material, the conductive agent, the binder, the thickener, and the filler.

### (Negative electrode)

The negative electrode includes a negative substrate and a negative active material layer disposed directly on the negative substrate or over the negative substrate with an intermediate layer interposed therebetween. The configuration of the intermediate layer is not particularly limited, and for example, can be selected from the configurations exemplified for the positive electrode.

The negative substrate has conductivity. As the material of the negative substrate, a metal such as copper, nickel, stainless steel or a nickel-plated steel, an alloy thereof, a carbonaceous material, or the like is used. Among these metals and alloys, the copper or copper alloy is preferable. Examples of the negative substrate include a foil, a deposited film, a mesh, and a porous material, and a foil is preferable from the viewpoint of cost. Accordingly, the negative substrate is preferably a copper foil or a copper alloy foil. Examples of the copper foil include a rolled copper foil and an electrolytic copper foil.

The average thickness of the negative substrate is preferably 2 µm or more and 35 µm or less, more preferably 3 µm or more and 30 µm or less, still preferably 4 µm or more and 25 µm or less, particularly preferably 5 µm or more and 20 µm or less. When the average thickness of the negative substrate falls within the above range, it is possible to enhance the energy density per volume of the nonaqueous electrolyte energy storage device while increasing the strength of the negative substrate.

The negative active material layer includes a negative active material. The negative active material layer includes optional components such as a conductive agent, a binder, a thickener, and a filler, if necessary.

The negative active material layer may contain a typical nonmetal element such as B, N, P, F, Cl, Br, and I, a typical metal element such as Li, Na, Mg, Al, K, Ca, Zn, Ga, Ge, Sn, Sr, and Ba, or a transition metal element such as Sc, Ti, V, Cr, Mn, Fe, Co, Ni, Cu, Mo, Zr, Ta, Hf, Nb, and W as a component other than the negative active material, the conductive agent, the binder, the thickener, and the filler.

The negative active material contains carbon-coated solid graphite. In the carbon-coated solid graphite, at least a part of the surface of the solid graphite is coated with a carbonaceous material other than graphite. When the negative active material contains solid graphite, precipitation of tungsten element graphite on the surface of voids inside particles can be suppressed. Furthermore, by using carbon-coated solid graphite in which at least a part of the surface is coated with a carbonaceous material other than graphite as the solid graphite, precipitation of tungsten element on the edge surface of the graphite crystal in the solid graphite can be suppressed. Therefore, the nonaqueous electrolyte energy storage device has a large capacity after storage in a high-temperature environment.

The above-mentioned void area ratio (percentage of voids) in the particle to the area of the whole particle in the cross section of the solid graphite, observed in the SEM image, is 2% or less, more preferably 1% or less, still preferably 0.5% or less. The lower limit of the area ratio (percentage of voids) may be 0%.

The solid graphite may be natural graphite or artificial graphite, but is preferably natural graphite. Since the solid graphite is natural graphite (solid natural graphite), the discharge capacity per mass of the negative active material increases, and the capacity after storage in a high-temperature environment also increases.

The natural graphite is a generic term for graphite obtained from natural resources. The shape of the solid natural graphite is not particularly limited, and examples thereof include scale-like graphite, massive graphite (flake graphite), and earthy graphite. The solid natural graphite may be spheroidized natural graphite particles obtained by spheroidizing scale-like natural graphite or the like. The natural graphite may have four peaks appearing at diffraction angles 2θ in the range from 40° to 50° in an X-ray diffraction pattern obtained with the use of CuKα, measured before charge-discharge or in a discharged state. These four peaks are considered to be two peaks derived from a hexagonal structure and two peaks derived from a rhombohedral structure. In the case of artificial graphite, generally, only two peaks derived from a hexagonal structure are considered to appear. In the X-ray diffraction pattern, the ratio ((012)/(100)) of the peak intensity derived from the (012) plane to the peak intensity derived from the (100) plane is preferably 0.3 or more, still preferably 0.4 or more. The peak intensity ratio ((012)/(100)) is preferably 0.6 or less. In this regard, the (100) plane is derived from the hexagonal structure, and the (012) plane is derived from the rhombohedral structure.

The average particle size of the solid graphite can be, for example, 1 µm or more and 25 µm or less, and is preferably 3 µm or more and 20 µm or less, more preferably 5 µm or more and 15 µm or less, and still preferably 7 µm or more and 13 µm or less. In some aspects, the average particle size of the solid graphite may be 8 µm or more and 12 µm or less, or 9 µm or more. The average particle size of the solid graphite falls within the range mentioned above, thereby allowing the charge-discharge performance of the nonaqueous electrolyte energy storage device to be enhanced. In particular, when the average particle size of the solid graphite is the above lower limit or more, the capacity after storage in a high-temperature environment is further increased. A crusher, a classifier, or the like is used in order to obtain the solid graphite with a predetermined particle size. The crushing method and the classification method can be selected from, for example, the methods exemplified for the positive electrode.

The carbonaceous material coating the solid graphite is preferably non-graphitic carbon. When the carbonaceous material is non-graphitic carbon, the capacity after storage in a high-temperature environment can be further increased. Examples of the non-graphitic carbon include hardly graphitizable carbon (hard carbon), easily graphitizable carbon (soft carbon), and amorphous carbon (amorphous carbon). The "hardly graphitizable carbon" refers to a carbon material in which the d₀₀₂ is 0.36 nm or more and 0.42 nm or less. Examples of the hardly graphitizable carbon include a phenol resin fired body, a furan resin fired body, and a furfuryl alcohol resin fired body. The "easily graphitizable carbon" refers to a carbon material in which the d₀₀₂ is 0.34 nm or more and less than 0.36 nm. Examples of the easily graphitizable carbon include coke and pyrolytic carbon. The "amorphous carbon" refers to a carbon material in which d₀₀₂ is more than 0.42 nm or a carbon material having no long-range ordered crystal structure (typically, a carbon material in which a peak attributed to (002) plane is not observed in X-ray diffraction measurement).

The lower limit of the coating amount (Ratio of mass of carbonaceous material to total mass of solid graphite and carbonaceous material coating the solid graphite) of the carbonaceous material in the carbon-coated solid graphite is 12.0% by mass, preferably 12.5% by mass. In some embodiments, the lower limit of the coating amount of the carbonaceous material may be 12.8% by mass or 13.0% by mass. When the coating amount of the carbonaceous material is the above lower limit or more, precipitation of tungsten element on the edge surface of the graphite crystal in solid graphite is suppressed, and the capacity after storage in a high-temperature environment can be increased. On the other hand, the upper limit of the coating amount of the carbonaceous material is not particularly limited, but is preferably 30% by mass, and more preferably 25% by mass in some cases. In some embodiments, the upper limit of the coating amount of the carbonaceous material may be 20% by mass or 15% by mass (for example, less than 15% by mass, 14.8% by mass or less, or 14.5% by mass or less). When the coating amount of the carbonaceous material is too large, the performance improvement effect (for example, the effect of increasing the capacity after storage in a high-temperature environment) by coating of the carbonaceous material may tend to slow down. The coating amount of the carbonaceous material in the carbon-coated solid graphite may be any lower limit or more and any upper limit or less.

The coating amount of the carbonaceous material is measured as follows. That is, using a thermogravimetric differential thermal analysis (TG/DTA) analyzer, the temperature is raised from room temperature to 1200°C at a temperature raising rate of 5°C/min in a water vapor atmosphere with a humidity of 65%RH, and a thermogravimetric curve (horizontal axis: temperature, vertical axis: mass of carbon-coated solid graphite) of the carbon-coated solid graphite is measured. In the thermogravimetric curve, the mass decreases as the temperature rises, but first, the mass corresponding to the moisture adsorbed on the solid graphite decreases at around 100°C, then the carbonaceous material coated with the solid graphite decomposes to decrease the mass corresponding to the carbonaceous material, and then the solid graphite as a base material decomposes to decrease the mass corresponding to the solid graphite. Therefore, in the obtained thermogravimetric curve, the mass of the carbon-coated solid graphite after the mass corresponding to the moisture adsorbed on the solid graphite is reduced at around 100°C is defined as a standard (100%), and the ratio of the mass reduction amount until the decomposition start temperature of the solid graphite is reached from the standard (= [Mass reduction amount until reaching decomposition start temperature of solid graphite from the above standard/mass of carbon-coated solid graphite in the above standard] × 100) is defined as the coating amount of the carbonaceous material. The thermogravimetric curve is typically divided into (1) a first region in which a mass change hardly occurs (2) a second region in which a mass of the carbonaceous material of the carbon-coated solid graphite rapidly decreases after the first region, (3) a third region in which a mass gradually decreases or a mass hardly decreases after the second region, and (4) a fourth region in which a mass of the solid graphite rapidly decreases after the third region as compared with the third region, after a mass corresponding to moisture adsorbed to solid graphite at around 100°C decreases with temperature increase. The temperature at which a bending point (a measurement point at which the slope of the curve changes) generated in the process of shifting from the third region of the above (3) to the fourth region of the above (4) is observed is a typical example of the decomposition start temperature of solid graphite here. The decomposition start temperature of the solid graphite is grasped from the intersection of the approximate straight line of the curve in the process of the above (3) and the approximate straight line of the curve showing the rapid mass decrease in the process of the above (4). The decomposition start temperature of the solid graphite can be generally 950°C or higher (For example, in the case of natural graphite, 950°C or more and 1000°C or less, and in the case of artificial graphite, 980°C or more and 1100°C or less).

The content of the carbon-coated solid graphite in the negative active material layer is preferably 60% by mass or more and 99.5% by mass or less, and more preferably 90% by mass or more and 99% by mass or less. When the content of the carbon-coated solid graphite falls within the above range, both high energy density and productivity of the negative active material layer can be achieved, and the capacity after storage in a high-temperature environment can be further increased.

The negative active material may contain another negative active material other than the carbon-coated solid graphite. As other negative active materials, hollow graphite (graphite other than carbon-coated solid graphite) and other various conventionally known negative active materials can be used. However, it is preferable that the carbon-coated solid graphite is the main negative active material. For example, in a cross-sectional SEM image of the negative electrode, the area ratio of the carbon-coated solid graphite to the area occupied by the negative active material (the area occupied by the carbon-coated solid graphite/the area occupied by the negative active material) is preferably 90% or more, more preferably 99% or more, and may be substantially 100%. The cross-sectional SEM image of the negative electrode is acquired in the same procedure as the SEM image when "the area ratio of voids (percentage of voids) in the particles to the total area of the particles" in the graphite particle is determined. The area occupied by the negative active material is the total area of the particles of the negative active material (the area also including voids). Using a cross-sectional SEM image including 10 or more particles of the negative active material in one field of view, the area ratio of the carbon-coated solid graphite to the area occupied by the negative active material (the area occupied by the carbon-coated solid graphite/the area occupied by the negative active material) is determined. In addition, the content of the carbon-coated solid graphite in all the negative active materials contained in the negative active material layer is preferably 90% by mass or more, more preferably 99% by mass or more, and may be substantially 100% by mass. As described above, by mainly using the carbon-coated solid graphite as the negative active material, the capacity after storage in a high-temperature environment is further increased.

The content of all of the negative active materials in the negative active material layer is preferably 60% by mass or more and 99% by mass or less, and more preferably 90% by mass or more and 98% by mass or less. When the content of all of the negative active materials falls within the above range, a balance can be achieved between the increased energy density and productivity of the negative active material layer.

The conductive agent, the binder, the thickener, the filler, and the like, which are optional components in the negative active material layer, can be selected from the materials exemplified for the positive electrode. The graphite included in the negative active material layer is, however, not included in the conductive agent.

The content of the conductive agent in the negative active material layer may be 3% by mass or less or 1% by mass or less, and the conductive agent may not be contained in the negative active material layer.

The content of the binder in the negative active material layer is preferably 0.5% by mass or more and 5% by mass or less, and more preferably 0.8% by mass or more and 3% by mass or less.

The content of the thickener in the negative active material layer is, for example, preferably 0.1% by mass or more and 6% by mass or less, and more preferably 0.5% by mass or more and 3% by mass or less.

The content of the filler in the negative active material layer may be, for example, 0.1% by mass or more and 8% by mass or less, or may be 0.5% by mass or more and 5% by mass or less. The content of the filler in the negative active material layer may be 3% by mass or less, or may be 1% by mass or less, and the filler may not be contained in the negative active material layer.

The negative active material layer can have a porosity of, for example, 30% or more and 60% or less. The lower limit of the porosity is preferably 35%, more preferably 38%, still preferably 40%, and still more preferably 42%. By setting the porosity of the negative active material layer to the above lower limit or more, the power of the nonaqueous electrolyte energy storage device, particularly, the power after storage in a high-temperature environment, can be further increased. On the other hand, the upper limit of the porosity is preferably 55%, more preferably 50%, and still preferably 48%. The porosity of the negative active material layer can be adjusted by the particle size of carbon-coated solid graphite, the presence or absence of pressing during production, the pressure of pressing, and the like.

The mass per unit area of the negative active material layer is not particularly limited, and is, for example, 2.0 mg/cm² or more and 12.0 mg/cm² or less. The lower limit of the mass per unit area of the negative active material layer is preferably 2.2 mg/cm², and more preferably 2.5 mg/cm² or 2.8 mg/cm². In some aspects, the mass per unit area of the negative active material layer may be, for example, 3.0 mg/cm² or more, or 3.5 mg/cm² or more. The upper limit of the mass per unit area of the negative active material layer is preferably 10.0 mg/cm², and more preferably 8.0 mg/cm² or 6.0 mg/cm². In the nonaqueous electrolyte energy storage device including the negative active material layer in which the mass per unit area is in the above range, the effect of application of the present configuration can be more suitably exhibited.

Although not particularly limited, the lower limit of the ratio of the mass of carbon-coated solid graphite per unit area contained in the negative active material layer to the mass of tungsten element per unit area contained in the positive active material layer may be about 25. The lower limit of the ratio is preferably 30, and more preferably 32, 34, or 36 in some cases. On the other hand, the upper limit of the ratio is preferably 100, and more preferably 80, 70, 60, or 45 in some cases. In the nonaqueous electrolyte energy storage device in which the ratio is in the above range, the effect of application of the present configuration can be more suitably exhibited. The ratio of the mass of the carbon-coated solid graphite per unit area contained in the negative active material layer to the mass of the tungsten element per unit area contained in the positive active material layer can be adjusted by the content of the tungsten element in the positive active material, the content of the carbon-coated solid graphite in the negative active material, the mass per unit area of the positive active material layer and the negative active material layer, and the like.

### (Separator)

The separator can be appropriately selected from known separators. As the separator, for example, a separator composed of only a substrate layer, a separator where a heat resistant layer containing heat resistant particles and a binder is formed on one surface or both surfaces of the substrate layer, or the like can be used. Examples of the form of the substrate layer of the separator include a woven fabric, a nonwoven fabric, and a porous resin film. Among these forms, the porous resin film is preferable from the viewpoint of strength, and the nonwoven fabric is preferable from the viewpoint of liquid retaining property of the nonaqueous electrolyte. As the material for the substrate layer of the separator, for example, a polyolefin such as polyethylene or polypropylene is preferable from the viewpoint of shutdown function, and polyimide, aramid, or the like is preferable from the viewpoint of resistance to oxidative decomposition. As the substrate layer of the separator, a composite material of these resins may also be used.

The heat resistant particles contained in the heat resistant layer have preferably a mass loss of 5% or less when heated from room temperature to 500°C in an air atmosphere of 1 atm, still preferably a mass loss of 5% or less when heated from room temperature to 800°C. Examples of materials that have a mass loss equal to or less than a predetermined value include inorganic compounds. Examples of the inorganic compound include oxides such as iron oxide, silicon oxide, aluminum oxide, titanium dioxide, zirconium oxide, calcium oxide, strontium oxide, barium oxide, magnesium oxide and aluminosilicate; nitrides such as aluminum nitride and silicon nitride; carbonates such as calcium carbonate; sulfates such as barium sulfate; hardly soluble ionic crystals such as calcium fluoride, barium fluoride, barium titanate; covalently bonded crystals such as silicon and diamond; and substances derived from mineral resources, such as talc, montmorillonite, boehmite, zeolite, apatite, kaolin, mullite, spinel, olivine, sericite, bentonite, and mica, and artificial products thereof. As the inorganic compound, simple substances or complexes of these substances may be used alone, or two or more thereof may be used in mixture. Among these inorganic compounds, silicon oxide, aluminum oxide, or aluminosilicate is preferable from the viewpoint of safety of the nonaqueous electrolyte energy storage device.

The separator has a porosity of preferably 80% by volume or less from the viewpoint of strength, and preferably 20% by volume or more from the viewpoint of discharge performance. Here, the term "porosity" is a volume-based value, and means a value measured with a mercury porosimeter.

As the separator, a polymer gel composed of a polymer and a nonaqueous electrolyte may also be used. Examples of the polymer include a polyacrylonitrile, a polyethylene oxide, a polypropylene oxide, a polymethyl methacrylate, a polyvinyl acetate, polyvinylpyrrolidone, and a polyvinylidene fluoride. The use of the polymer gel has the effect of suppressing liquid leakage. As the separator, the polymer gel may be used in combination with the porous resin film, the nonwoven fabric, or the like described above.

### (Nonaqueous electrolyte)

The nonaqueous electrolyte can be appropriately selected from known nonaqueous electrolytes. For the nonaqueous electrolyte, a nonaqueous electrolyte solution may be used. The nonaqueous electrolyte solution contains a nonaqueous solvent and an electrolyte salt dissolved in the nonaqueous solvent.

The nonaqueous solvent can be appropriately selected from known nonaqueous solvents. Examples of the nonaqueous solvent include cyclic carbonates, chain carbonates, carboxylic acid esters, phosphoric acid esters, sulfonic acid esters, ethers, amides, and nitriles. As the nonaqueous solvent, one obtained by substituting, with a halogen, a part of hydrogen atoms contained in these compounds may be used.

Examples of the cyclic carbonate include ethylene carbonate (EC), propylene carbonate (PC), butylene carbonate (BC), vinylene carbonate (VC), vinylethylene carbonate (VEC), chloroethylene carbonate, fluoroethylene carbonate (FEC), difluoroethylene carbonate (DFEC), styrene carbonate, 1-phenylvinylene carbonate, and 1,2-diphenylvinylene carbonate. Among these examples, EC is preferable.

Examples of the chain carbonate include diethyl carbonate (DEC), dimethyl carbonate (DMC), ethyl methyl carbonate (EMC), diphenyl carbonate, trifluoroethyl methyl carbonate, and bis(trifluoroethyl)carbonate. Among these examples, EMC is preferable.

As the nonaqueous solvent, it is preferable to use a cyclic carbonate or a chain carbonate, and it is more preferable to use a cyclic carbonate and a chain carbonate in combination. The use of the cyclic carbonate allows the promoted dissociation of the electrolyte salt to improve the ionic conductivity of the nonaqueous electrolyte solution. The use of the chain carbonate allows the viscosity of the nonaqueous electrolyte solution to be kept low. When a cyclic carbonate and a chain carbonate are used in combination, the volume ratio between the cyclic carbonate and the chain carbonate (cyclic carbonate : chain carbonate) is preferably set to, for example, a range from 5 : 95 to 50 : 50.

The electrolyte salt can be appropriately selected from known electrolyte salts. Examples of the electrolyte salt include a lithium salt, a sodium salt, a potassium salt, a magnesium salt, and an onium salt. Among these examples, a lithium salt is preferable.

Examples of the lithium salt include inorganic lithium salts such as LiPF₆, LiPO₂F₂, LiBF₄, LiClO₄, and LiN(SO₂F)₂, lithium oxalates such as lithium bis(oxalate)borate (LiBOB), lithium difluorooxalatoborate (LiFOB), and lithium bis(oxalate)difluorophosphate (LiFOP), and lithium salts including a halogenated hydrocarbon group, such as LiSO₃CF₃, LiN(SO₂CF₃)₂, LiN(SO₂C₂F₅)₂, LiN(SO₂CF₃)(SO₂C₄F₉), LiC(SO₂CF₃)₃, and LiC(SO₂C₂F₅)₃. Among these examples, an inorganic lithium salt is preferable, and LiPF₆ is more preferable.

The content of the electrolyte salt in the nonaqueous electrolyte solution is, under 1 atm at 20°C, preferably 0.1 mol/dm³ or more and 2.5 mol/dm³ or less, more preferably 0.3 mol/dm³ or more and 2.0 mol/dm³ or less, still preferably 0.5 mol/dm³ or more and 1.7 mol/dm³ or less, particularly preferably 0.7 mol/dm³ or more and 1.5 mol/dm³ or less. The content of the electrolyte salt falls within the above range, thereby allowing the ionic conductivity of the nonaqueous electrolyte solution to be increased.

The nonaqueous electrolyte solution may include an additive, besides the nonaqueous solvent and the electrolyte salt. Examples of the additive include oxalic acid salts such as lithium bis(oxalate)borate (LiBOB), lithium difluorooxalatoborate (LiFOB), and lithium bis(oxalate)difluorophosphate (LiFOP); imide salts such as lithium bis(fluorosulfonyl)imide (LiFSI); aromatic compounds such as biphenyl, alkylbiphenyl, terphenyl, partly hydrogenated terphenyl, cyclohexylbenzene, t-butylbenzene, t-amylbenzene, diphenyl ether, and dibenzofuran; partial halides of the aromatic compounds, such as 2-fluorobiphenyl, o-cyclohexylfluorobenzene, and p-cyclohexylfluorobenzene; halogenated anisole compounds such as 2,4-difluoroanisole, 2,5-difluoroanisole, 2,6-difluoroanisole, and 3,5-difluoroanisole; vinylene carbonate, methylvinylene carbonate, ethylvinylene carbonate, succinic anhydride, glutaric anhydride, maleic anhydride, citraconic anhydride, glutaconic anhydride, itaconic anhydride, cyclohexanedicarboxylic anhydride; ethylene sulfite, propylene sulfite, dimethyl sulfite, methyl methanesulfonate, busulfan, methyl toluenesulfonate, dimethyl sulfate, ethylene sulfate, sulfolane, dimethyl sulfone, diethyl sulfone, dimethylsulfoxide, diethylsulfoxide, tetramethylene sulfoxide, diphenyl sulfide, 4,4'-bis(2,2-dioxo-1,3,2-dioxathiolane), 4-methylsulfonyloxymethyl-2,2-dioxo-1,3,2-dioxathiolane, thioanisole, diphenyl disulfide, dipyridinium disulfide, 1,3-propene sultone, 1,3-propane sultone, 1,4-butane sultone, 1,4-butene sultone, perfluorooctane, tristrimethylsilyl borate, tristrimethylsilyl phosphate, tetrakistrimethylsilyl titanate, lithium monofluorophosphate, and lithium difluorophosphate. One of these additives may be used singly, or two or more thereof may be used in mixture.

The content of the additive included in the nonaqueous electrolyte solution is preferably 0.01% by mass or more and 10% by mass or less, more preferably 0.1% by mass or more and 7% by mass or less, still preferably 0.2% by mass or more and 5% by mass or less, particularly preferably 0.3% by mass or more and 3% by mass or less, with respect to the total mass of the nonaqueous electrolyte solution. When the content of the additives falls within the above range, it is possible to improve the capacity retention performance or the cycle performance after storage in a high-temperature environment, and to further improve the safety.

As the nonaqueous electrolyte, a solid electrolyte may be used, or the nonaqueous electrolyte solution and a solid electrolyte may be used in combination.

The solid electrolyte can be selected from any materials, such as lithium, sodium, and calcium, which have ionic conductivity and are solid at normal temperature (for example, 15°C to 25°C). Examples of the solid electrolyte include a sulfide solid electrolyte, an oxide solid electrolyte, a nitride solid electrolyte, a polymer solid electrolyte, and a gel polymer electrolyte.

Examples of the sulfide solid electrolyte include, in the case of a lithium ion secondary battery, Li₂S-P₂S₅, LiI-Li₂S-P₂S₅, and Li₁₀Ge-P₂S₁₂.

The shape of the nonaqueous electrolyte energy storage device according to the present embodiment is not particularly limited, and examples thereof include cylindrical batteries, prismatic batteries, flat batteries, coin batteries, and button batteries.

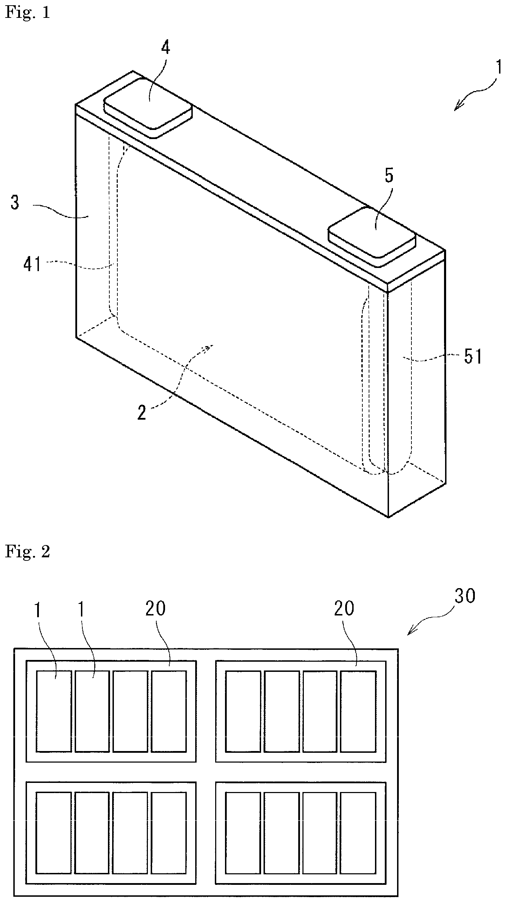

Fig. 1 shows a nonaqueous electrolyte energy storage device 1 as an example of a prismatic battery. It is to be noted that Fig. 1 is a view illustrating the inside of a case in a perspective manner. An electrode assembly 2 including a positive electrode and a negative electrode wound with a separator interposed therebetween is housed in a prismatic case 3. The positive electrode is electrically connected to a positive electrode terminal 4 via a positive electrode lead 41. The negative electrode is electrically connected to a negative electrode terminal 5 via a negative electrode lead 51.

### <Configuration of energy storage apparatus>

The nonaqueous electrolyte energy storage device according to the present embodiment can be mounted as an energy storage apparatus including an energy storage unit (battery module) configured by assembling a plurality of nonaqueous electrolyte energy storage devices on a power source for automobiles such as electric vehicles (EV), hybrid vehicles (HEV), and plug-in hybrid vehicles (PHEV), a power source for electronic devices such as personal computers and communication terminals, or a power source for power storage, or the like. In this case, the technique of the present invention may be applied to at least one nonaqueous electrolyte energy storage device included in the energy storage apparatus.

Fig. 2 illustrates an example of an energy storage apparatus 30 formed by assembling energy storage units 20 in each of which two or more electrically connected nonaqueous electrolyte energy storage devices 1 are assembled. The energy storage apparatus 30 may include a busbar (not illustrated) for electrically connecting two or more nonaqueous electrolyte energy storage devices 1 and a busbar (not illustrated) for electrically connecting two or more energy storage units 20. The energy storage unit 20 or the energy storage apparatus 30 may include a state monitor (not illustrated) that monitors the state of one or more nonaqueous electrolyte energy storage devices 1.

### <Method for producing nonaqueous electrolyte energy storage device>

A method for producing the nonaqueous electrolyte energy storage device of the present embodiment can be appropriately selected from known methods. The producing method includes, for example, preparing an electrode assembly, preparing a nonaqueous electrolyte, and housing the electrode assembly and the nonaqueous electrolyte in a case. Preparing the electrode assembly includes: preparing a positive electrode and a negative electrode, and forming an electrode assembly by stacking or winding the positive electrode and the negative electrode with a separator interposed therebetween.

The positive electrode can be prepared, for example, by applying a positive composite paste to a positive substrate directly or via an intermediate layer, followed by drying. The positive composite paste contains components constituting a positive active material layer such as a positive active material, and a dispersion medium. The applied positive composite paste may be dried and then pressed or the like.

The negative electrode can be prepared, for example, by applying a negative composite paste to a negative substrate directly or via an intermediate layer, followed by drying. The negative composite paste contains components constituting the negative active material layer, such as carbon-coated solid graphite, and a dispersion medium. The applied negative composite paste may be dried and then pressed or the like.

Housing the nonaqueous electrolyte in a case can be appropriately selected from known methods. For example, in the case of using a nonaqueous electrolyte solution for the nonaqueous electrolyte, the nonaqueous electrolyte solution may be injected from an inlet formed in the case, and the inlet may be then sealed.

### <Other embodiments>

The nonaqueous electrolyte energy storage device according to the present invention is not limited to the embodiment described above, and various changes may be made without departing from the gist of the present invention. For example, to the configuration of an embodiment, the configuration of another embodiment can be added, and a part of the configuration of an embodiment can be replaced by the configuration of another embodiment or a well-known technique. Furthermore, a part of the configuration according to an embodiment can be deleted. In addition, a well-known technique can be added to a configuration of an embodiment.

While a case where the nonaqueous electrolyte energy storage device is used as a nonaqueous electrolyte secondary battery (for example, lithium ion secondary battery) that is chargeable and dischargeable has been described in the embodiment mentioned above, the type, shape, dimensions, capacity, and the like of the nonaqueous electrolyte energy storage device are arbitrary. The present invention can also be applied to capacitors such as various secondary batteries, electric double-layer capacitors, or lithium ion capacitors.

### EXAMPLES

Hereinafter, the present invention will be described in more detail with reference to Examples, but the present invention is not limited to the following Examples.

### [Example 1]

### (Fabrication of positive electrode)

A positive active material was prepared in which tungsten oxide was deposited on the particle surface of LiNi_{1/3}Mn_{1/3}Co_{1/3}O₂. The content of tungsten element with respect to metal elements other than lithium element and tungsten element in this positive active material was 1 mol%. The content of tungsten element with respect to metal elements other than lithium element and tungsten element in the positive active material was measured by the above measurement method.

A positive composite paste was prepared using the positive active material, acetylene black (AB) as a conductive agent, a polyvinylidene fluoride (PVDF) as a binder, and an N-methylpyrrolidone (NMP) as a dispersion medium. The mass ratio of the positive active material, the conductive agent, and the binder was 93 : 5 : 2 in terms of solid content. A positive composite paste was applied onto both surfaces of an aluminum foil as a positive substrate so that the mass per unit area (mass of solid content) was 6 mg/cm², and dried. Thereafter, roll pressing was performed to obtain a positive electrode with the positive active material layer stacked on both surfaces of the positive substrate.

### (Fabrication of negative electrode)

As a carbonaceous material, solid natural graphite coated with amorphous carbon (carbon-coated solid natural graphite) was prepared as a negative active material. The percentage of voids in the carbon-coated solid graphite was 0.45%, the average particle size was 9.9 µm, and the coating amount of the carbonaceous material was 10.6% by mass. The percentage of voids, the average particle size, and the coating amount of the carbonaceous material in the carbon-coated solid graphite were measured by the above measurement method.

A negative composite paste was prepared using the negative active material, a styrene-butadiene rubber (SBR) as a binder, carboxymethyl cellulose (CMC) as a thickener, and water as a dispersion medium. The mass ratio of the carbon-coated solid graphite, the binder, and the thickener was 98. 5 : 1 : 0. 5 in terms of solid content. A negative composite paste was applied onto both surfaces of a copper foil as a negative substrate so that the mass per unit area (mass of solid content) was 4 mg/cm², and dried. Thereafter, roll pressing was performed to obtain a negative electrode with the negative active material layer stacked on both surfaces of the negative substrate.

### (Nonaqueous electrolyte solution)

In a solvent obtained by mixing ethylene carbonate and ethyl methyl carbonate at a volume ratio of 30 : 70, LiPF₆ was dissolved at a concentration of 1.2 mol/dm³ to obtain a nonaqueous electrolyte solution.

### (Separator)

As the separator, a polyolefin microporous membrane was used.

### (Assembly of nonaqueous electrolyte energy storage device)

The positive electrode, the negative electrode, and the separator were used to obtain a wound electrode assembly. The electrode assembly was housed in a case, the nonaqueous electrolyte solution was injected into the case, and the case was sealed to obtain a nonaqueous electrolyte energy storage device according to Example 1.

### [Examples 2 to 4 and Comparative Examples 1 to 9]

Nonaqueous electrolyte energy storage devices of Examples 2 to 4 and Comparative Examples 1 to 9 were obtained in the same manner as in Example 1 except that the types of the positive active material and the negative active material and the coating amount of the carbonaceous material (amorphous carbon) were as shown in Table 1. In Comparative Examples 6 to 11, LiNi_{1/3}Mn_{1/3}Co_{1/3}O₂ containing no tungsten element was used as the positive active material.

As the "non-solid" graphite, hollow natural graphite having a percentage of voids of 3% and an average particle size of 9.1 µm was used.

### [Evaluation]

### (1) Initial charge-discharge

The obtained respective nonaqueous electrolyte energy storage devices were subjected to the initial charge-discharge under the following conditions. In a thermostatic chamber at 25°C, the nonaqueous electrolyte energy storage devices were subjected to constant current charge at a charge current of 1.0 C and an end-of-charge voltage of 4.10 V, and then to constant voltage charge at 4.10 V. A charge termination condition was a total charge time of 3 hours. Thereafter, a pause time of 10 minutes was provided. The energy storage devices were subjected to constant current discharge at a discharge current of 1.0 C and an end-of-discharge voltage of 3.0 V.

### (2) Measurement of capacity after storage in a high-temperature environment

Next, each nonaqueous electrolyte energy storage device was subjected to constant current charge at a charge current of 1.0 C and an end-of-charge voltage of 4.10 V in a thermostatic bath at 25°C, and then subjected to constant voltage charge at 4.10 V. A charge termination condition was a total charge time of 3 hours. Each nonaqueous electrolyte energy storage device after such constant current constant voltage charge was stored in a thermostatic chamber at 70°C for 20 days. Thereafter, the device was stored in a thermostatic chamber at 25°C for 3 hours or more, and discharged at a constant current at a discharge current of 1.0 C and an end-of-discharge voltage of 3.0 V. The measured value of the discharge capacity in each nonaqueous electrolyte energy storage device is shown in Table 1 as "capacity after storage in a high-temperature environment". In Table 1, the capacity after storage in a high-temperature environment in each example is shown as a relative value when Comparative Example 10 is set to 100.

**[Table 1]**

| | Positive active material | Negative active material | | Evaluation |
|---|---|---|---|---|
| | Content of tungsten element [mol%] | Graphite | Coating amount of carbonaceous material [% by mass] | Capacity after storage in high-temperature environment Relative value with Comparative Example 10 set as 100 |
| Example 1 | **1.0** | Solid | **12.5** | **114** |
| Example 2 | **1.0** | Solid | **13.2** | **113** |
| Comparative Example 1 | **1.0** | Solid | **10.6** | **103** |
| Comparative Example 2 | **1.0** | Solid | **11.0** | **104** |
| Comparative Example 3 | **1.0** | Non-solid | **10.6** | **106** |
| Comparative Example 4 | **1.0** | Non-solid | **11.0** | **107** |
| Comparative Example 5 | **1.0** | Non-solid | **12.5** | **110** |
| Comparative Example 6 | **0.0** | Solid | **10.6** | **101** |
| Comparative Example 7 | **0.0** | Solid | **11.0** | **104** |
| Comparative Example 8 | **0.0** | Solid | **12.5** | **106** |
| Comparative Example 9 | **0.0** | Solid | **13.2** | **106** |
| Comparative Example 10 | **0.0** | Non-solid | **10.6** | **100** |
| Comparative Example 11 | **0.0** | Non-solid | **11.0** | **101** |

As shown in Table 1, in Examples 1 and 2 containing a positive active material containing a tungsten element and carbon-coated solid graphite coated with a carbonaceous material, in which the coating amount of the carbonaceous material was 12.0% by mass or more, the capacity after storage in a high-temperature environment was larger as compared with Comparative Examples 1 to 11. From this result, it was confirmed that the capacity after storage in a high-temperature environment can be increased by using the positive active material containing the tungsten element in combination with the carbon-coated solid graphite in which the coating amount of the carbonaceous material is 12.0% by mass or more.

### INDUSTRIAL APPLICABILITY

The present invention can be applied to nonaqueous electrolyte energy storage devices and the like for use as power sources for electronic devices such as personal computers and communication terminals, and automobiles and the like.

### DESCRIPTION OF REFERENCE SIGNS

1: Energy storage device
2: Electrode assembly
3: Case
4: Positive electrode terminal
41: Positive electrode lead
5: Negative electrode terminal
51: Negative electrode lead
20: Energy storage unit
30: Energy storage apparatus

## Claims

1. A nonaqueous electrolyte energy storage device comprising:
a positive electrode containing a positive active material containing a tungsten element;
a negative electrode including carbon-coated solid graphite in which at least a part of a surface of solid graphite is coated with a carbonaceous material other than graphite,
wherein the percentage of voids of the carbon-coated solid graphite is 2% or less, and
wherein a coating amount of the carbonaceous material in the carbon-coated solid graphite is 12.0% by mass or more.

2. The nonaqueous electrolyte energy storage device according to claim 1, wherein the carbonaceous material is non-graphitic carbon.

3. The nonaqueous electrolyte energy storage device according to claim 1 or 2, wherein the solid graphite is solid natural graphite.

4. The nonaqueous electrolyte energy storage device according to claim 1 or 2, wherein the solid graphite has an average particle size of 5 µm or more.

5. The nonaqueous electrolyte energy storage device according to claim 1 or 2,
wherein the positive active material further contains a transition metal element other than the tungsten element and a lithium element, and
wherein a content of the tungsten element with respect to metal elements other than the tungsten element and the lithium element in the positive active material is 0.2 mol% or more.
